# EUROPÄISCHE PATENTSCHRIFT

(11) **EP 2 835 327 B1**
(45) Veröffentlichungstag und Bekanntmachung des Hinweises auf die Patenterteilung: **02.12.2015**
(21) Anmeldenummer: 14175746.8
(22) Anmeldetag: 04.07.2014
(51) Int. Cl.: B65G 15/42, B65G 15/14

(54) **Riemen zum Transportieren von Flaschen**
Conveyor belt for transporting bottles
Courroie destinée au transport de bouteilles

(30) Priorität: 26.07.2013 DE 102013214608
(43) Veröffentlichungstag der Anmeldung: 11.02.2015
(73) Patentinhaber: Krones AG, 93073 Neutraubling (DE)
(72) Erfinder: Dünzinger, Bernhard, 93073 Neutraubling (DE); Richter, Stefan, 93073 Neutraubling (DE)
(74) Vertreter: Grünecker Patent- und Rechtsanwälte PartG mbB

(56) Entgegenhaltungen:
- DE-A- 2 306 179
- DE-A1-102009 031 152
- DE-B- 1 194 320
- US-A- 5 492 216

## Beschreibung

Die Erfindung betrifft einen Riemen zum Transportieren von Flaschen in einer Behandlungsmaschine mit einem Treibriemen und einer mit den Flaschen in Eingriff bringbaren, profilierten Auflage, wobei das Profil aus erhaben ausgeformten Elementen und aus ebenen Bereichen einer Oberfläche der Auflage zwischen den Elementen gebildet wird, wobei die Auflage mit den Elementen in ihrer Gesamtheit einstückig ausgebildet ist und wobei jedes der Elemente eine mit den Flaschen in Eingriff bringbare Vorderflanke und eine von der Vorderflanke abgewandte Hinterflanke umfasst.

In Behandlungsmaschinen, wie beispielsweise Inspektionsmaschinen, werden Riemen zum Transportieren der Flaschen verwendet. Üblicherweise umfassen solche Riemen eine Auflage und einen Treibriemen.

Beispielsweise werden diese Riemen zur Beförderung von Flaschen paarweise als Endlosriemen gegenüberliegend angeordnet. Jeder dieser Endlosriemen wird durch je ein Zahnriemenrad angetrieben. Die Flaschen werden von den paarig angeordneten Riemen erfasst und bodenfrei über die jeweiligen Einbauten transportiert. Im Einzelnen wird durch die paarweise gegenüberliegende Anordnung der Riemen ein Flaschenförderkanal gebildet. Der gegenseitige Zwischenabstand der Riemen ist zumindest geringfügig kleiner gewählt als der Außendurchmesser der Flaschen. Dadurch können in diesen Flaschenförderkanal eintretende Flaschen seitlich von den elastischen Riemen erfasst und im weiteren Verlauf reibschlüssig gefördert werden.

Aus dem Stand der Technik sind Riemen bekannt, die sich aus einem Treibriemen und einer Auflage zusammensetzen. Über den Treibriemen kann der Riemen angetrieben werden. Die Auflage befindet sich auf der von dem Treibriemen abgewandten Seite des Riemens und wird mit den Flaschen reibschlüssig in Eingriff gebracht. Für das bodenfreie Transportieren von aufrechten Flaschen in einer horizontalen Ebene werden Riemen mit unterschiedlichen Auflagen verwendet. Beispielsweise kommen Riemen zum Einsatz, die aus einem Zahnriemen und einer elastischen Schwammauflage bestehen. Der Zahnriemen weist eine einseitig angeformte Verzahnung auf. An der der Verzahnung gegenüberliegenden Seite ist die Schwammauflage angeordnet und wird mit den Flaschen reibschlüssig in Eingriff gebracht.

Die Schwammauflage hat den Nachteil, dass sie eine weitgehend offene Porenstruktur aufweist, in die Wasser, Reinigungsmittel, Bakterien, Hefesporen, Schmutz und andere unerwünschte Stoffe eindringen und dort verbleiben können. Dieser Umstand ist insbesondere in aseptisch arbeitenden Abfülllinien für Getränke oder Lebensmittel nicht erwünscht, da hier keimfreie Flaschen aus Glas oder Kunststoff einem dem Befüllungsprozess vorangehenden Inspektionsschritt zur Überprüfung der leeren Flaschen unterzogen werden und dabei verkeimen könnten.

Das Dokument DE-A-10 2009 031152 offenbart einem Riemen zum Transportieren von Flaschen nach dem Oberbegriff des Anspruchs 1.

Um den vorher beschriebenen Nachteil zu umgehen, kommen Riemen zum Einsatz, die aus einem Zahnriemen und einer elastischen Auflage bestehen, die eine durchgehend geschlossene, porenfreie Oberfläche besitzt. Als Materialien kommen alle den Anforderungen entsprechenden elastischen Natur- oder Kunstwerkstoffe wie Elastomere, Gummi, Kautschuk oder Mischungen verschiedener Werkstoffe in Betracht. Die Oberfläche der Auflage kann dabei eine Vielzahl von gleichmäßig angeordneten, erhaben ausgeformten, noppen-, finger-, lamellen- oder zahnartigen Elementen aufweisen. Die vorgesehene Bewegungsrichtung des Riemens wird durch die Anordnung und Ausrichtung der Elemente bestimmt. Ein Nachteil dieses Riemens besteht darin, dass die Elemente zu wenig elastisch sind und beim Transportieren der Flaschen nicht flexibel nachgeben können. Dies ist beispielsweise erwünscht, wenn die Geschwindigkeit des Riemens erhöht wird, um die Flaschen schneller durch die Behandlungsmaschine zu transportieren. Der Mangel an Elastizität kann durch die Wahl eines elastischeren Materials nicht ausgeglichen werden, da die Auflage dann insgesamt zu elastisch sein könnte und die Flaschen dann nicht mehr reibschlüssig von der Auflage gegriffen werden. Die Verwendung von Kombinationen unterschiedlicher Materialien mit unterschiedlichen Elastizitätseigenschaften würde zu aufwendigen, komplizierten und kostenintensiven Herstellungsverfahren einer Auflage für einen solchen Riemen führen. Flaschen aber auch Flaschenrohlinge, sogenannte Preforms, werden, wie oben erwähnt, vor jeder Weiterbehandlung üblicherweise einem Inspektionsschritt unterzogen. Hier ist ein besonders ruhiger Flaschentransport bzw. Preform-Transport notwendig. Andernfalls kann der Flaschenboden oder die Innenwand nicht durch die Flaschenmündung hindurch betrachtet bzw. inspiziert werden. Um Behältertoleranzen, die von Herstellern in einem Bereich von +/- 2,5mm angegeben werden und in der Praxis auch höhere Abweichungen erreichen können, auszugleichen, muss ein solcher Riemen vorgespannt werden. Gerade beim Aufsetzen der Flaschen am Ende des Flaschenförderkanals beim Abförderer bzw. Auslauftransporteur der Flaschen ist es besonders wichtig, dass keine Flasche ins Taumeln gerät oder umfällt. Eine umgefallene Flasche zieht einen Produktionsstop von mindestens 2 Minuten nach sich.

Deshalb wird ein Riemen benötigt, der aus einem Treibriemen und einer Auflage besteht, der sowohl ein reibschlüssiges Greifen der Flaschen als auch einen sicheren und besonders ruhigen Transport der Flaschen gewährleistet selbst bei Geschwindigkeiten von mindestens 2 m/sec und darüber hinaus auch ein sicheres, standfestes Absetzen der Flaschen in der Behandlungsmaschine ermöglicht.

Der Erfindung liegt demzufolge die Aufgabe zugrunde, einen Riemen anzugeben, der einen Treibriemen und eine Auflage umfasst und der beim Transportieren von Flaschen in einer Behandlungsmaschine einen sicheren Transport der Flaschen gewährleisten kann, auch wenn die Geschwindigkeit des Riemens erhöht wird.

Die Aufgabe wird durch die Merkmale des Patentanspruchs 1 gelöst.

Der Riemen zum Transportieren von Flaschen in einer Behandlungsmaschine, insbesondere einer Inspektionsmaschine, umfasst einen Treibriemen und eine mit den Flaschen in Eingriff bringbare, profilierte Auflage, wobei das Profil der Auflage erhaben ausgeformte Elemente und ebene Bereiche einer Oberfläche der Auflage zwischen den Elementen umfasst, wobei die Auflage mit den Elementen in ihrer Gesamtheit einstückig ausgebildet ist, und wobei jedes der Elemente eine mit den Flaschen in Eingriff bringbare Vorderflanke und eine von der Vorderflanke abgewandte Hinterflanke umfasst, wobei die Hinterflanke eine Unterhöhlung aufweist.

Die Behandlungsmaschine kann eine Inspektionsmaschine sein oder jede Art von Maschine, in der Flaschen mit Hilfe von Riemen transportiert werden. In einer Inspektionsmaschine werden die Flaschen aber auch Preforms einem Inspektionsschritt unterzogen. Dabei werden beispielsweise der Flaschenboden, die Flascheninnenräume und -wände untersucht. Der Treibriemen kann auf einer von der Auflage wegweisenden Seite eine Antriebsverzahnung und insbesondere einen vorzugsweise mittig verlaufenden Längssteg aufweisen. Auf der gegenüberliegenden Seite der Verzahnung ist die Auflage angeordnet. Die Auflage kann aus einem elastischen Material mit geschlossener Oberfläche gebildet sein. Die Oberfläche der Auflage ist vorzugsweise porenfrei und durchgehend geschlossen. Die Bewegungsrichtung des Riemens ist die Förderrichtung, in die die Flaschen transportiert werden. Der Ausdruck "in Bewegungsrichtung des Riemens" bedeutet in Transport- bzw. Laufrichtung der Flaschen.

Jedes der erhaben ausgeformten Elemente weist eine Länge, Breite und Höhe auf. Die Elemente können zahn- und/oder noppen- und/oder fingerförmig ausgebildet sein.

Die Vorderflanke wird mit den Flaschen in Eingriff gebracht. Im Ruhezustand oder ohne Belastung, d.h. ohne dass die Vorderflanke mit den Flaschen in Eingriff gebracht wird, kann die Vorderflanke eine geradlinig verlaufende, "geknickte" (stückweise geradlinig) oder eine gebogene Form aufweisen. In einem Längsquerschnitt der Auflage betrachtet, verläuft die Vorderflanke vorzugsweise in einer ansteigenden Neigung entgegen der Bewegungsrichtung des Riemens, wenn die Vorderflanke nicht mit den Flaschen in Eingriff gebracht ist. Alternativ kann die Vorderflanke zwei Abschnitte aufweisen von denen ein Abschnitt zur Oberfläche der Auflage senkrecht ausgerichtet ist und sich der zweite Abschnitt an den senkrechten anschließt, aber in eine gleichmäßig steigende Schräge übergeht, deren Ende schließlich mit der Hinterflanke eine Kante bildet.

Die Hinterflanke ist in Längsrichtung des Riemens von der Vorderflanke abgewandt und weist eine Unterhöhlung auf, die durch einen Abschnitt der Hinterflanke gebildet wird. Der Begriff "Unterhöhlung" bedeutet, dass ein Abschnitt der Hinterflanke ausgehöhlt sein kann. D.h., dass sich im Element ein Hohlraum befinden kann, der nur zur Hinterflanke hin offen ist. Der Begriff "Unterhöhlung" kann aber auch bedeuten, dass der Abschnitt der Hinterflanke geradlinig in Richtung zur Oberfläche der Auflage und in Richtung der Vorderflanke geneigt abfällt. Dies ist gleichbedeutend damit, dass der Abschnitt der Hinterflanke entgegen der Bewegungsrichtung geradlinig ansteigt, wenn die Vorderflanke in Bewegungsrichtung des Riemens ausgerichtet ist. Die Hinterflanke kann geradlinig oder gebogen geformt sein. Denkbar ist auch, dass die Hinterflanke einen geraden und einen gebogenen Abschnitt aufweist oder Kombinationen davon. Die Unterhöhlung kann durch einen gebogenen Abschnitt der Hinterflanke gebildet werden. Ein Abschnitt der Hinterflanke kann in vertikaler Richtung zur Oberfläche der Auflage senkrecht ausgerichtet sein. Beispielsweise kann in vertikaler Richtung zur Oberfläche der Auflage ein geradlinig geformter Abschnitt der Hinterflanke in einen gebogenen Abschnitt übergehen. Ein Abschnitt der Hinterflanke kann in Bezug auf die Oberfläche der Auflage einen Überhang bilden. Der Abschnitt kann ein Teil der Hinterflanke oder die gesamte Hinterflanke sein.

Die Unterhöhlung der Hinterflanke hat den Vorteil, dass, wenn die Vorderflanke mit den Flaschen in Eingriff gebracht wird, die Elemente den Druck elastischer aufnehmen können, der durch die Flaschen auf die Elemente ausgeübt wird, und dennoch die Flaschen reibschlüssig und in sicherer Weise transportieren, auch wenn die Geschwindigkeit des Riemens erhöht wird. Durch die Unterhöhlung in der Hinterflanke wird eine höhere Elastizität erreicht. Die Nachgiebigkeit der Elemente wird erhöht ohne Material oder Materialzusammensetzungen zu ändern. Eine bedarfsgerechte Elastizität des Riemens wird somit nicht durch das Material sondern durch die Konstruktion bzw. Geometrie des Riemens selbst erreicht.

Gemäß einer Weiterbildung der Erfindung weist ein Abschnitt der Hinterflanke einen Neigungswinkel in einem Bereich von mehr als 0° und weniger als 90° zur Oberfläche der Auflage entgegen einer Bewegungsrichtung des Riemens auf, wenn die Auflage nicht mit den Flaschen in Eingriff gebracht ist. Die Hinterflanke kann von verschiedenen Abschnitten gebildet werden, die entweder geradlinig oder gebogen, senkrecht oder geneigt verlaufen.

Gemäß einer bevorzugten Weiterbildung der Erfindung erreicht eine Höhe eines jeden der erhabenen Elemente über der Oberfläche ein Maximum, wobei sich die Vorderflanke in Bewegungsrichtung des Riemens von einem Ende eines ersten ebenen Bereichs der Oberfläche der Auflage bis zu dem Maximum erstreckt und die Hinterflanke von dem Maximum bis zu einem Beginn eines zweiten ebenen Bereichs der Oberfläche der Auflage abfällt.

Das Maximum ist in diesem Fall die höchste Ausdehnung der Vorderflanke und die höchste Ausdehnung der Hinterflanke in vertikaler Richtung ausgehend von der Oberfläche der Auflage.

Gemäß einer weiteren bevorzugten Weiterbildung der Erfindung weist ein geradliniger Abschnitt der Hinterflanke einen Winkel zur Oberfläche der Auflage auf einer von der Vorderflanke abgewandten Seite von weniger als 90° auf, wenn die Auflage nicht mit Flaschen in Eingriff gebracht ist.

Gemäß einer weiteren bevorzugten Weiterbildung der Erfindung ist jedes der Elemente durch ebene Bereiche der Oberfläche der Auflage von anderen Elementen beabstandet. Der Begriff "eben" ist so zu verstehen, dass die ebenen Bereiche keine erhabenen Elemente aufweisen. Die ebenen Bereiche der Oberfläche der Auflage zwischen den erhaben ausgeformten Elementen können entweder strukturiert, glatt oder gestrahlt sein.

Gemäß einer weiteren bevorzugten Weiterbildung der Erfindung kann sich die Unterhöhlung über einen Abschnitt entlang der gesamten Hinterflanke erstrecken oder über einen Abschnitt entlang eines Teils der Hinterflanke.

Gemäß einer weiteren bevorzugten Weiterbildung der Erfindung kann die Unterhöhlung in Form einer Hohlkehle gebildet sein, insbesondere in Form einer negativen Ausrundung einer Kante, in welcher ein Ende der Hinterflanke und ein Ende eines ebenen Bereichs der Oberfläche der Auflage zusammen treffen.

Gemäß einer weiteren bevorzugten Weiterbildung der Erfindung kann die Unterhöhlung geradlinig oder als negative Ausrundung ausgebildet sein. Der Begriff "negative Ausrundung" meint, dass sich die Ausprägung der Ausrundung in Bewegungsrichtung des Riemens erstreckt und auf diese Weise eine Unterhöhlung der Hinterflanke gebildet wird. Denkbar ist auch, dass sich die Ausprägung der Ausrundung eines Elements in Bewegungsrichtung des Riemens erstreckt und sich die Ausprägung der Ausrundung eines anderen Elements entgegen der Bewegungsrichtung des Riemens erstreckt.

Gemäß einer weiteren bevorzugten Weiterbildung der Erfindung können die Elemente in wenigstens einer längs zu einer Bewegungsrichtung des Riemens verlaufender Reihe angeordnet sein.

Gemäß einer weiteren bevorzugten Weiterbildung der Erfindung kann die Vorderflanke eines nachfolgenden Elements unterhalb der Hinterflanke eines vorangehenden Elements beginnen. Eine solche Anordnung hat den Vorteil, dass die Elemente elastisch nachgeben können und dennoch durch ein gegenseitiges Stützen eine erhöhte Stabilität aufweisen. Weiterhin kann dadurch die dichte der Anordnung erhöht werden.

Gemäß einer weiteren bevorzugten Weiterbildung der Erfindung können die Elemente in quer zur Bewegungsrichtung benachbarten Reihen bevorzugt in Bewegungsrichtung versetzt zueinander angeordnet sein.

Gemäß einer weiteren bevorzugten Weiterbildung der Erfindung können die Reihen jeweils durch eine Nut voneinander beabstandet sein. Dies hat den Vorteil, dass sich die einzelnen Elemente, z. B. unter Belastung, aufgrund der Nut besser bewegen können.

Gemäß einer weiteren bevorzugten Weiterbildung der Erfindung können die Elemente einer Reihe gegenläufig zu den Elementen einer anderen Reihe angeordnet sein. Der Begriff "gegenläufig" kann bedeuten, dass die Elemente einer ersten Reihe so angeordnet sind, dass deren Vorderflanken in Bewegungsrichtung des Riemens ausgerichtet sind, und die Elemente einer zweiten Reihe so angeordnet sind, dass deren Hinterflanken in Bewegungsrichtung des Riemens ausgerichtet sind. Wird die Bewegungsrichtung des Riemens umgekehrt, sind die Vorderflanken der zweiten Reihe und die Hinterflanken der ersten Reihe in Bewegungsrichtung ausgerichtet. Alternativ können die Elemente innerhalb einer Reihe gegenläufig zueinander angeordnet sind. Das heißt, dass die Vorderflanken von jeweils zwei Elementen in einer Reihe zueinander gewandt und die Hinterflanken von jeweils zwei Elementen in einer Reihe zueinander gewandt sein können.

Die gegenläufige Anordnung der Elemente hat den Vorteil, dass die Bewegungsrichtung des Riemens unabhängig von der Ausrichtung der Elemente gewählt werden kann.

Kombinationen der oben genannten Weiterbildungen sind möglich.

Bevorzugte Ausführungsformen der Erfindung werden im Nachfolgenden unter Bezugnahme auf die Zeichnungen beschrieben.

### Kurzbeschreibung der Zeichnungen:

- Fig. 1: ist eine schematische Draufsicht einer Anordnung von Einrichtungen zum Transportieren von Flaschen mit einem Riemenpaar.
- Fig. 2: ist eine schematische Draufsicht eines erfindungsgemäßen Riemens.
- Fig. 3: ist eine Querschnittsansicht einer Auflage für einen erfindungsgemäßen Riemen.
- Fig. 4: zeigt ein Ausführungsbeispiel eines Elements einer Auflage für einen erfindungsgemäßen Riemen.
- Fig. 5: zeigt ein weiteres Ausführungsbeispiel eines Elements einer Auflage für einen erfindungsgemäßen Riemen.
- Fig. 6: zeigt ein weiteres Ausführungsbeispiel eines Elements einer Auflage für einen erfindungsgemäßen Riemen.
- Fig. 7: zeigt ein weiteres Ausführungsbeispiel eines Elements einer Auflage für einen erfindungsgemäßen Riemen.
- Fig. 8: zeigt ein weiteres Ausführungsbeispiel eines Elements einer Auflage für einen erfindungsgemäßen Riemen.
- Fig. 9: zeigt ein weiteres Ausführungsbeispiel eines Elements einer Auflage für einen erfindungsgemäßen Riemen.
- Fig. 10: zeigt ein weiteres Ausführungsbeispiel von Elementen einer Auflage für einen erfindungsgemäßen Riemen.
- Fig. 11: ist eine Querschnittsansicht einer Auflage für einen erfindungsgemäßen Riemen.
- Fig. 12: ist eine Ansicht einer Auflage für einen erfindungsgemäßen Riemen.
- Fig. 13: ist eine Querschnittsansicht einer Auflage für einen erfindungsgemäßen Riemen.
- Fig. 14: ist eine Ansicht einer Auflage für einen erfindungsgemäßen Riemen.

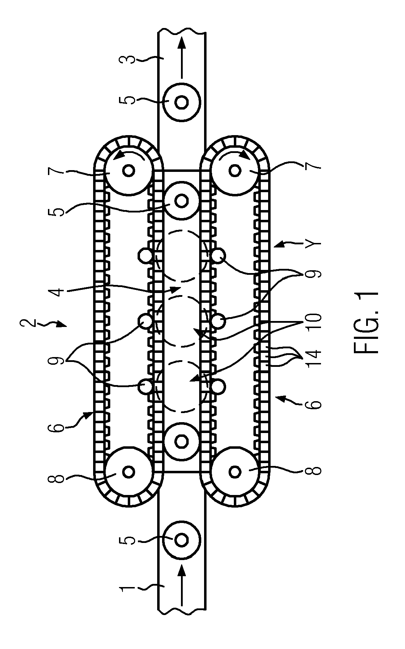

In Figur 1 ist beispielsweise die Anordnung eines Riemenpaares zur Beförderung von Flaschen in einer Inspektionsmaschine schematisch dargestellt. Eine Riemenstation 2 besteht aus zwei sich gegenüberliegenden Riemen 6, je ein Zahnriemenrad 7, je ein Umlenkrad 8 und den von den paarweise gegenüberliegenden Riemen 6 gebildeten Zwischenraum 4. Ein Zuförderer 1 befördert eine Flasche 5 zur Riemenstation 2. Die sich gegenüberliegenden Riemen 6 werden durch jeweils ein Zahnriemenrad 7 angetrieben. Die Flaschen 5 werden durch den Zwischenraum 4 bodenfrei über Einbauten 10, wie beispielsweise Lichtquellen, Kameras und Sensoren, geführt. Der Ausdruck "bodenfrei" bedeutet in diesem Zusammenhang, dass die Flaschen 5 ohne Bodenunterstützung über die Einbauten, zum Beispiel für eine Flaschenbodenkontrolle, geführt werden. Der den Zwischenraum 4 bildende Abstand zwischen den Riemen 6 ist zumindest geringfügig enger gewählt als der Außendurchmesser einer Flasche 5, so dass eine auf dem Zuförderer 1 aufrecht stehend zugeführte Flasche 5 durch die Riemen an der äußeren Oberfläche reibschlüssig erfassbar und im weiteren Verlauf bis zum Abförderer 3 bodenfrei an den die Inspektionseinrichtungen bildenden Einbauten 10 im Zwischenraum 4 vorbei führbar ist. Angetrieben werden die Riemen 6 durch jeweils ein Zahnriemenrad 7. Ferner sind für jeden Riemen 6 jeweils ein frei drehbar gelagertes Umlenkrad 8 und ggf. noch mehrere Stützrollen 9 vorgesehen. Beide Räder 7 und 8 drehen sich jeweils um vertikale Achsen.

Die im Zusammenhang mit Figur 1 beschriebenen Riemen können in jeder anderen Maschine, in welcher Flaschen transportiert werden, zur Anwendung kommen. Eine Führung der Flaschen durch die Riemen mit Bodenunterstützung ist denkbar.

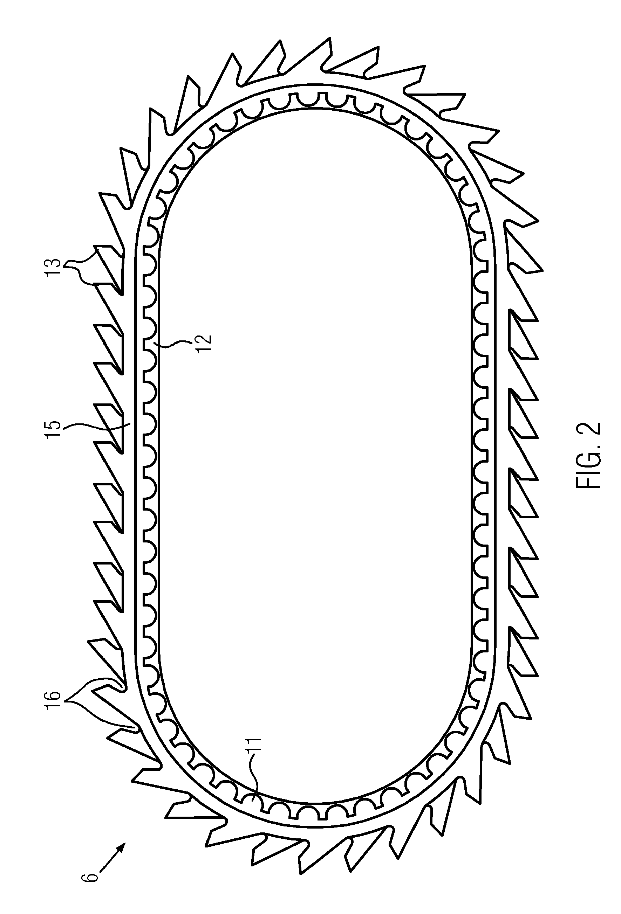

In Figur 2 ist der Aufbau eines erfindungsgemäßen Riemens 6 dargestellt. Der Riemen 6 besitzt einen Treibriemen 11 mit einer Stegleiste 12 und eine profilierte Auflage 15 mit erhaben ausgebildeten Elementen 13. Der Treibriemen 11 weist eine einseitig ausgeformte Verzahnung und die vorzugsweise mittig in Bewegungsrichtung des Riemens verlaufende Stegleiste 12 auf. Mit Hilfe der Verzahnung des Treibriemens wird der Riemen 6 angetrieben. Die Stegleiste 12 dient der Höhenführung des Riemens 6.

Die Auflage 15 ist an der gegenüber liegenden Seite des Treibriemens 11 angeordnet, die von der Verzahnung weg weist. Die erhaben ausgebildeten Elemente 13 beinhalten eine Unterhöhlung 16. Die erhaben ausgebildeten Elemente 13 der Auflage 15 sind in gleichmäßigen Abständen längs zur Riemenerstreckung angeordnet. In dieser Ausführungsform sind die Elemente in zwei längs zur Riemenerstreckung verlaufenden Reihen angeordnet. Die Elemente der benachbarten Reihe quer zur Riemenerstreckung sind in Längsrichtung versetzt zueinander angeordnet. D.h. die Elemente sind entlang einer Reihe in Längsrichtung des Riemens periodisch mit einem bestimmten Abstand angeordnet. Die Elemente in den Reihen in Querrichtung des Riemens sind gegeneinander versetzt. Alternativ können die Elemente verschiedener Reihen in Längsrichtung des Riemens auch ohne Versatz angelegt sein. Die Elemente können zahn- und/oder noppen- und/oder fingerförmig gebildet sein. Der Riemen kann mehr als zwei längs zur Riemenerstreckung verlaufende Reihen aufweisen, in denen die Elemente angeordnet sind. Die Reihen können jeweils durch eine Nut von einander beabstandet sein. Die Elemente einer Reihe können so angeordnet sein, dass ein nachfolgendes Element unterhalb von einem vorhergehenden Element beginnt. Der in Figur 2 gezeigte Abstand zwischen den Elementen einer Reihe längs zur Riemenerstreckung wäre dann kleiner. Die in Figur 2 gezeigten Elemente sind in eine Laufrichtung ausgerichtet. Alternativ können die Elemente jeweils einer Reihe längs zur Riemenerstreckung gegenläufig zu den Elementen einer anderen Reihe ausgerichtet sein. Der Riemen 6 ist als Endlosriemen dargestellt. Alternativ kann der Riemen Enden aufweisen.

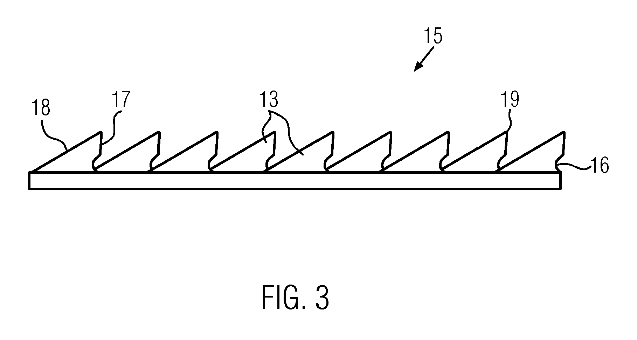

Figur 3 zeigt eine schematische Querschnittsansicht einer Auflage für einen erfindungsgemäßen Riemen. Die profilierte Auflage 15 beinhaltet zahnförmig ausgebildete Elemente 13. In dieser Ausführungsform sind die Elemente in längs zur Riemenerstreckung verlaufenden Reihen angeordnet. In Längsrichtung des Riemens sind die Elemente durch ebene Bereiche der Oberfläche der Auflage von einander beabstandet. In der schematischen Querschnittsansicht ist dargestellt, dass die Elemente der benachbarten Reihe quer zur Riemenerstreckung versetzt zueinander angeordnet sind. Die Elemente 13 besitzen in Bewegungsrichtung des Riemens eine Vorderflanke 18, eine Hinterflanke 17 und ein Maximum 19. Die Hinterflanke 17 weist eine Unterhöhlung 16 auf, die durch einen Abschnitt der Hinterflanke gebildet wird. In dieser Ausführungsform ist die Unterhöhlung in Form einer negativen Ausrundung des Abschnitts der Hinterflanke gebildet. Alternativ kann die Unterhöhlung geradlinig oder in Form einer Hohlkehle ausgebildet sein. In dieser Ausführungsform können zwei Abschnitte identifiziert werden, die die Hinterflanke bilden. Ein Abschnitt ist gebogen und bildet die Unterhöhlung. Ein weiterer Abschnitt ist geradlinig geformt und verläuft in vertikaler Richtung senkrecht zur Oberfläche der Auflage. Alternativ kann sich die Unterhöhlung über einen Abschnitt entlang der gesamten Hinterflanke erstrecken. Die Elemente 13 sind in zwei längs zur Riemenerstreckung verlaufenden Reihen angeordnet, wobei die Vorderflanken und die Hinterflanken jeweils gleich ausgerichtet sind. Alternativ können die Elemente einer Reihe gegenläufig zu den Elementen der anderen Reihe angeordnet sein. Dann sind die Vorderflanken der Elemente der einen Reihe den Vorderflanken der anderen Reihe entgegengesetzt angeordnet.

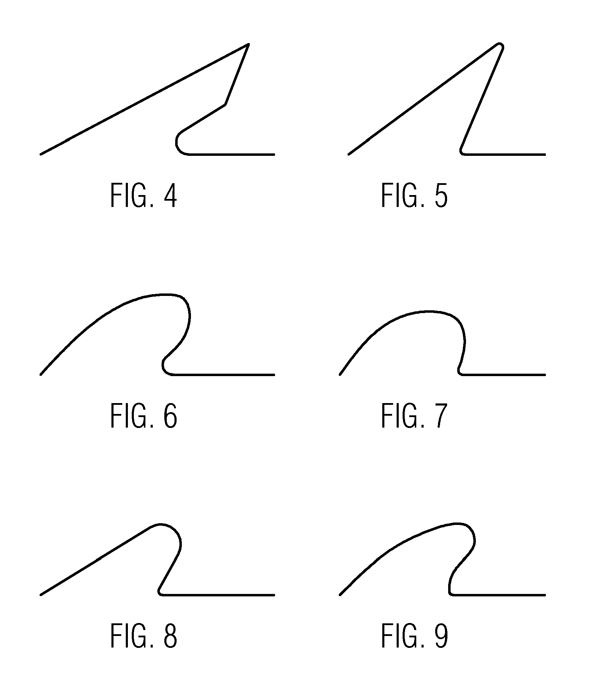

In den Figuren 4 bis 9 sind beispielhaft verschieden geformte Elemente einer Auflage dargestellt. Wie in den Figuren 4 bis 9 zu sehen ist, kann die Unterhöhlung in unterschiedlicher Weise ausgebildet sein. Verschiedene Abschnitte der Hinterflanke können unterschiedlich geformt sein.

Figur 4 zeigt ein zahnförmiges Element eines Profils einer Auflage. Ein Abschnitt der Hinterflanke weist eine Unterhöhlung in Form einer Hohlkehle auf, d.h. in Form einer negativen Ausrundung der Kante, in der die Hinterflanke und der ebene Bereich der Oberfläche der Auflage zusammen treffen. Ein weiterer Abschnitt der Hinterflanke ist geradlinig geformt. Der geradlinige Abschnitt der Hinterflanke, der sich in vertikaler Richtung oberhalb der Unterhöhlung befindet, weist einen von der Vorderflanke abgewandten Winkel zur Oberfläche der Auflage von weniger als 90° auf.

In Figur 5 ist ein zahnförmiges Element eines Profils einer Auflage dargestellt, bei dem sich der Abschnitt, der die Unterhöhlung bildet, geradlinig entlang der gesamten Hinterflanke erstreckt. Die Hinterflanke verläuft geradlinig und weist einen von der Vorderflanke abgewandten Winkel zu der Oberfläche der Auflage von weniger als 90° auf. Die Unterhöhlung wird durch die von der Vorderflanke abgewandte Neigung der Hinterflanke in Bezug auf die Vertikale gebildet.

In Figur 6 ist ein noppenförmiges Element eines Profils einer Auflage aufgeführt. Die Hinterflanke verläuft in gebogener Form in Richtung zur Oberfläche der Auflage. Ein Abschnitt der Hinterflanke bildet die Unterhöhlung in Form einer negativen Ausrundung. Ein weiterer Abschnitt der Hinterflanke ist von einem gebogenen Verlauf gekennzeichnet.

Figur 7 zeigt ein weiteres noppenförmiges Element eines Profils einer Auflage mit einer Unterhöhlung. Die Hinterflanke verläuft in Richtung zur Oberfläche der Auflage so, dass der Neigungswinkel des Gefälles eines Teils der Hinterflanke in Richtung zur Oberfläche der Auflage mehr als 90° beträgt. Die Unterhöhlung in der Hinterflanke wird durch den von der Vorderflanke abgewandt ansteigenden Verlauf der Hinterflanke gebildet.

Figur 8 illustriert ein fingerförmiges Element eines Profils einer Auflage. Die Hinterflanke verläuft in Richtung zur Oberfläche der Auflage so, dass der Neigungswinkel des Gefälles eines Teils der Hinterflanke in vertikaler Richtung zur Oberfläche der Auflage mehr als 90° beträgt. Die Unterhöhlung der Hinterflanke ergibt sich aus diesem Gefälle. Anders formuliert bedeutet dies, dass ein geradliniger Abschnitt der Hinterflanke einen Winkel zur Oberfläche der Auflage auf einer von der Vorderflanke abgewandten Seite von weniger als 90° aufweist, wenn die Auflage nicht mit Flaschen in Eingriff gebracht ist.

Figur 9 bildet ein weiteres fingerförmiges Element eines Profils einer Auflage ab. Ein Abschnitt der Hinterflanke umfasst eine Unterhöhlung in Form einer Hohlkehle. Ein weiterer Abschnitt der Hinterflanke verläuft in gebogener Form.

In den oben dargestellten Ausführungsformen der Figuren 4 bis 9 befindet sich der Abschnitt, der die Unterhöhlung formt, in vertikaler Richtung am unteren Ende der Hinterflanke oder erstreckt sich entlang der gesamten Hinterflanke. Alternativ kann die Unterhöhlung in vertikaler Richtung auf jeder beliebigen Höhe der Hinterflanke ausgebildet sein. Beliebige Kombinationen von negativer Ausrundung des Abschnitts entlang der Hinterflanke sind denkbar. Die Elemente des Profils der Auflage können beliebige Formen annehmen, solange gewährleistet ist, dass eine Hinterflanke mit einer Unterhöhlung ausgebildet wird.

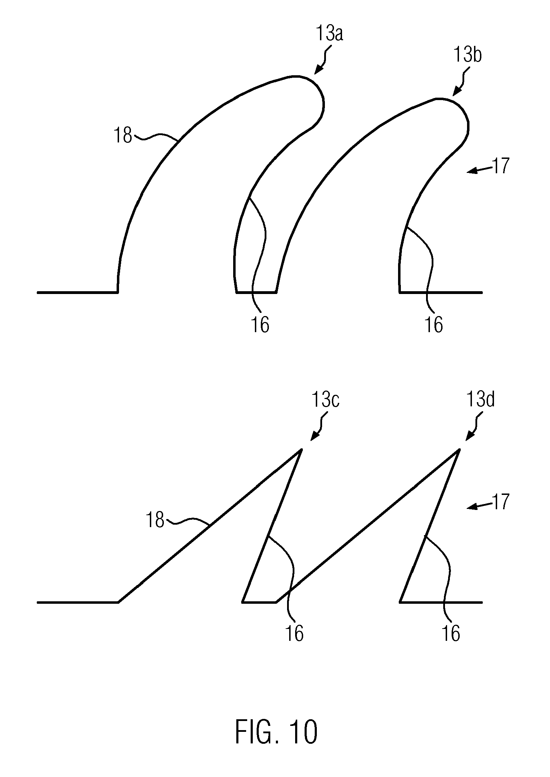

Figur 10 zeigt zwei mögliche Ausführungsformen, in denen die Elemente untereinander stehend angeordnet sind. In der Figur 10 sind die Elemente 13a, 13b, 13c und 13d jeweils mit einer Unterhöhlung 16 abgebildet. Die Elemente 13a und 13b sind fingerförmig und die Elemente 13c und 13d sind zahnförmig ausgebildet. Der untere Teil der Vorderflanke 18 des Elements 13b befindet sich unterhalb des oberen Teils der Hinterflanke 17 des Elements 13a. In ähnlicher Weise befindet sich ein Teil der Vorderflanke des Elements 13d unterhalb der Hinterflanke des Elements 13c.

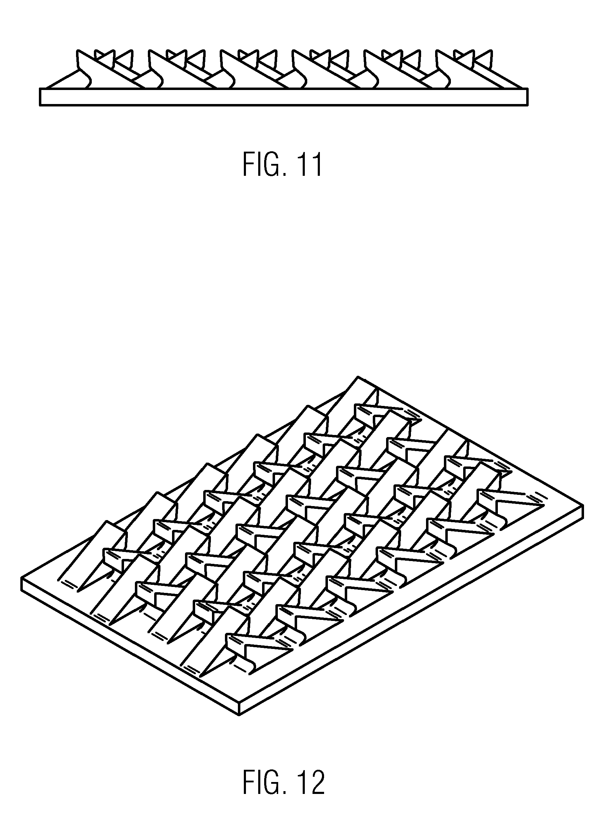

Figur 11 zeigt einen Längsquerschnitt einer Auflage für einen erfindungsgemäßen Riemen. Die Elemente sind in mehreren längs zu einer Bewegungsrichtung des Riemens verlaufenden, benachbarten Reihen angeordnet. Die Elemente einer Reihe sind gegenläufig zu den Elementen einer benachbarten Reihe ausgebildet. Die Hinterflanke eines jeden Elements umfasst einen geradlinigen Abschnitt und eine Unterhöhlung. Die Vorderflanke eines jeden Elements weist eine geradlinig verlaufende Form auf. Je nach gewählter Bewegungsrichtung des Riemens verläuft die Form der Vorderflanke eines Elements steigend oder fallend in Bezug auf die Bewegungsrichtung des Riemens.

Figur 12 zeigt eine Auflage mit gegenläufig angeordneten Elementen. In der Figur 12 sind die Elemente in mehreren längs zu einer Bewegungsrichtung des Riemens verlaufenden Reihen angeordnet. Die Elemente einer Reihe sind entgegengesetzt zu den Elementen einer benachbarten Reihe ausgerichtet. Die Elemente einer Reihe sind zu den gleich ausgerichteten Elementen einer übernächsten Reihe längs zu einer Bewegungsrichtung versetzt.

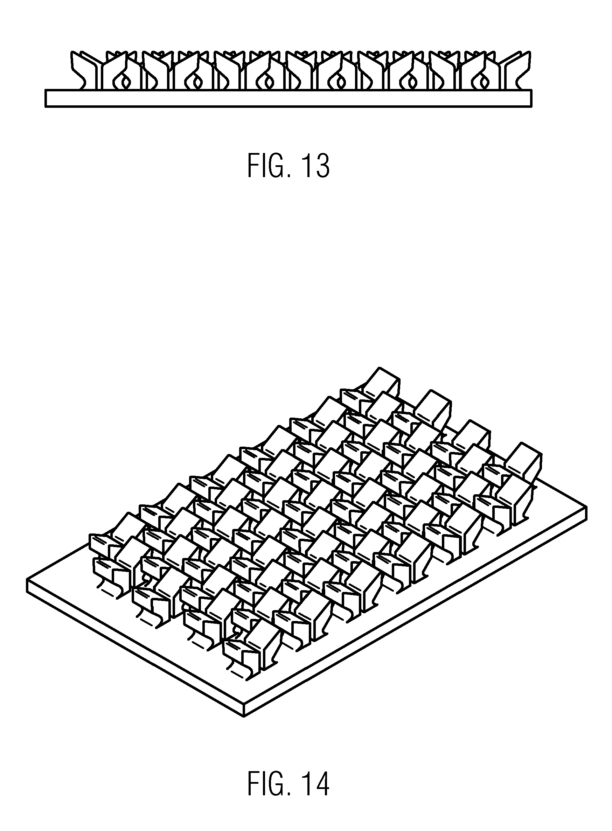

Figur 13 zeigt einen Längsquerschnitt einer Auflage für einen erfindungsgemäßen Riemen. Die Elemente innerhalb einer Reihe sind gegenläufig zueinander angeordnet. Die Vorderflanken von jeweils zwei Elementen einer Reihe zeigen zueinander. Die Hinterflanken dieser Elemente weisen jeweils in eine entgegengesetzte Richtung. Der minimale Abstand zwischen den Vorderflanken zweier Elemente einer Reihe ist kleiner als der minimale Abstand einer Hinterflanke eines Elements zur Hinterflanke eines benachbarten Elements in der gleichen Reihe. Die Vorderflanke eines jeden Elements weist zwei Abschnitte auf. Ein Abschnitt ist senkrecht zur Oberfläche der Auflage ausgebildet. An diesen Abschnitt schließt sich ein weiterer geradlinig verlaufender Abschnitt an, der je nach Bewegungsrichtung des Riemens in Bewegungsrichtung ansteigt oder abfällt.

Figur 14 zeigt eine Auflage für einen erfindungsgemäßen Riemen mit gegenläufig angeordneten Elementen. Die Elemente sind paarweise angeordnet. Die Elemente einer Reihe sind zueinander gegenläufig ausgerichtet. Die Vorderflanken von jeweils zwei Elementen weisen zueinander. Der minimale Abstand zwischen den beiden Elementen, deren Vorderflanken zueinander weisen, ist kleiner als der minimale Abstand zwischen zwei Elementen, deren Hinterflanken zueinander ausgerichtet sind. Die Elementpaare einer Reihe sind in einer Bewegungsrichtung zu den Elementpaaren einer benachbarten Reihe versetzt angeordnet.

Im Vorangehenden wurden verschiedene Ausführungsformen des erfindungsgemäßen Riemens gezeigt. Die gezeigten Ausführungsformen sind alle mit einander kombinierbar. Es resultiert ein Riemen zum Transportieren von Flaschen in einer Behandlungsmaschine, der durch seine Geometrie bedarfsgerecht flexibel und elastisch reagieren und dadurch die zu transportierenden Flaschen für den Transport zuverlässiger greifen kann.

## Patentansprüche

1. Riemen (6) zum Transportieren von Flaschen (5) in einer Behandlungsmaschine, insbesondere einer Inspektionsmaschine, mit einem Treibriemen (11) und einer mit den Flaschen in Eingriff bringbaren, profilierten Auflage (15), wobei das Profil erhaben ausgeformte Elemente (13) und ebene Bereiche einer Oberfläche der Auflage zwischen den Elementen umfasst, wobei die Auflage mit den Elementen in ihrer Gesamtheit einstückig ausgebildet ist, und wobei jedes der Elemente eine mit den Flaschen in Eingriff bringbare Vorderflanke (18) und eine von der Vorderflanke abgewandte Hinterflanke (17) umfasst,
**dadurch gekennzeichnet, dass**
die Hinterflanke eine Unterhöhlung (16) aufweist.

2. Riemen nach Patentanspruch 1, worin ein Abschnitt der Hinterflanke einen Neigungswinkel in einem Bereich von mehr als 0° und weniger als 90° zur Oberfläche der Auflage entgegen einer Bewegungsrichtung des Riemens aufweist, wenn die Auflage nicht mit den Flaschen in Eingriff gebracht ist.

3. Riemen nach einem der Patentansprüche 1 oder 2, worin eine Höhe eines jeden der erhabenen Elemente über der Oberfläche ein Maximum (19) erreicht und wobei sich die Vorderflanke des Riemens von einem Ende eines ersten ebenen Bereichs der Oberfläche der Auflage bis zu dem Maximum erstreckt und die Hinterflanke von dem Maximum bis zu einem Beginn eines zweiten ebenen Bereichs der Oberfläche der Auflage abfällt.

4. Riemen nach einem der Patentansprüche 1 - 3, worin ein geradliniger Abschnitt der Hinterflanke einen Winkel zur Oberfläche der Auflage auf einer von der Vorderflanke abgewandten Seite von weniger als 90° aufweist, wenn die Auflage nicht mit Flaschen in Eingriff gebracht ist.

5. Riemen nach einem der Patentansprüche 1 - 4, worin jedes der Elemente durch ebene Bereiche der Oberfläche der Auflage von anderen Elementen beabstandet ist.

6. Riemen nach einem der Patentansprüche 1 - 5, worin sich die Unterhöhlung über einen Abschnitt entlang der gesamten Hinterflanke erstreckt, oder
worin sich die Unterhöhlung über einen Abschnitt entlang eines Teils der Hinterflanke erstreckt.

7. Riemen nach einem der Patentansprüche 1 - 6, worin die Unterhöhlung in Form einer Hohlkehle gebildet ist, insbesondere in Form einer negativen Ausrundung einer Kante, in welcher ein Ende der Hinterflanke und ein Ende eines ebenen Bereichs der Oberfläche der Auflage zusammen treffen.

8. Riemen nach einem der Patentansprüche 1 - 6, worin die Unterhöhlung geradlinig ausgebildet ist, oder
worin die Unterhöhlung als negative Ausrundung ausgebildet ist.

9. Riemen nach einem der Patentansprüche 1 - 8, worin die Elemente in wenigstens einer längs zu einer Bewegungsrichtung verlaufenden Reihe angeordnet sind.

10. Riemen nach Patentanspruch 9, worin die Vorderflanke eines nachfolgenden Elements unterhalb der Hinterflanke eines vorangehenden Elements beginnt.

11. Riemen nach Patentanspruch 9 oder 10, wobei die Elemente in quer zur Bewegungsrichtung benachbarten Reihen bevorzugt in Bewegungsrichtung versetzt zueinander angeordnet sind.

12. Riemen nach einem der Patentansprüche 9 - 11, worin die Reihen jeweils durch eine Nut voneinander beabstandet sind.

13. Riemen nach einem der Patentansprüche 9 - 12, wobei die Elemente einer Reihe gegenläufig zu den Elementen einer anderen Reihe angeordnet sind.

## Claims

1. Belt (6) for transporting bottles (5) in a processing machine, particularly an inspection machine, comprising a drive belt (11) and a profiled support (15) which is engageable with the bottles, where the profile comprises elevated elements (13) and flat portions of a surface of the support between the elements, the support is made integral with the elements in their entirety, and each of the elements comprises a leading edge (18) engageable with the bottles and a trailing edge (17) facing away from the leading edge,
**characterized in that**
the trailing edge comprises an undercut (16).

2. Belt according to patent claim 1, wherein a section of the trailing edge has an angle of inclination ranging from more than 0° to less than 90° relative to the surface of the support in a direction opposite to a direction of movement of the belt when the support is not engaged with the bottles.

3. Belt according to any one of patent claims 1 or 2, wherein a height of each of the elevated elements above the surface reaches a maximum (19), and wherein the leading edge of the belt extends from an end of a first flat portion of the surface of the support up to the maximum and the trailing edge declines from the maximum up to a beginning of a second flat portion of the surface of the support.

4. Belt according to any one of patent claims 1 to 3, wherein a straight section of the trailing edge has an angle of less than 90° relative to the surface of the support at a side facing away from the leading edge when the support is not engaged with bottles.

5. Belt according to any one of patent claims 1 to 4, wherein each of the elements is spaced by flat portions of the surface of the support from other elements.

6. Belt according to any one of patent claims 1 to 5, wherein the undercut extends over a section along the whole trailing edge, or
wherein the undercut extends over a section along a part of the trailing edge.

7. Belt according to any one of patent claims 1 to 6, wherein the undercut is shaped in the form of a fillet, particularly in the form of a negative rounding of an edge, in which an end of the trailing edge and an end of a flat portion of the surface of the support coincide.

8. Belt according to any one of patent claims 1 to 6, wherein the undercut is made straight, or wherein the undercut is formed as a negative rounding.

9. Belt according to any one of patent claims 1 to 8, wherein the elements are arranged in at least one row extending lengthwise with respect to a direction of movement.

10. Belt according to patent claim 9, wherein the leading edge of a subsequent element begins underneath the trailing edge of a preceding element.

11. Belt according to patent claim 9 or 10, wherein the elements are arranged offset to one another preferably in the direction of movement in rows which are adjacent in a direction transverse to the direction of movement.

12. Belt according to any one of patent claims 9 to 11, wherein the rows are each spaced apart from one another by a groove.

13. Belt according to any one of patent claims 9 to 12, wherein the elements of a row are arranged opposite to the elements of another row.

## Revendications

1. Courroie (6) pour assurer le transport de bouteilles (5) dans une machine de traitement, notamment une machine d'inspection, comprenant une courroie d'entraînement (11) et une partie d'appui profilée (15) pouvant être amenée en prise avec les bouteilles, courroie
dans laquelle le profil comporte des éléments (13) surélevés formés en relief, et des zones planes d'une surface de la partie d'appui entre les éléments,
dans laquelle la partie d'appui est réalisée, dans sa globalité, d'un seul tenant avec lesdits éléments,
et dans laquelle chacun des éléments comprend un flanc avant (18) pouvant être amené en prise avec les bouteilles, et un flanc arrière (17) opposé au flanc avant,
**caractérisée en ce que**
le flanc arrière présente un sous-cavage (16).

2. Courroie selon la revendication 1, dans laquelle un tronçon du flanc arrière présente un angle d'inclinaison dans une plage allant de plus de 0° à moins de 90° par rapport à la surface de la partie d'appui, à l'encontre d'une direction de mouvement de la courroie, lorsque la partie d'appui n'est pas amenée en prise avec les bouteilles.

3. Courroie selon l'une des revendications 1 ou 2, dans laquelle une hauteur de chacun des éléments surélevés en relief au-dessus de la surface atteint un maximum (19), et le flanc avant de la courroie s'étend d'une extrémité d'une première zone plane de la surface de la partie d'appui jusqu'au maximum, et le flanc arrière s'abaisse du maximum jusqu'à un début d'une deuxième zone plane de la surface de la partie d'appui.

4. Courroie selon l'une des revendications 1 - 3, dans laquelle un tronçon rectiligne du flanc arrière présente un angle de moins de 90° par rapport à la surface de la partie d'appui sur un côté opposé au flanc avant, lorsque la partie d'appui n'est pas amenée en prise avec des bouteilles.

5. Courroie selon l'une des revendications 1 - 4, dans laquelle chacun des éléments est espacé d'autres éléments par des zones planes de la surface de la partie d'appui.

6. Courroie selon l'une des revendications 1 - 5, dans laquelle le sous-cavage s'étend sur un secteur le long de la totalité du flanc arrière, ou
dans laquelle le sous-cavage s'étend sur un secteur le long d'une partie du flanc arrière.

7. Courroie selon l'une des revendications 1 - 6, dans laquelle le sous-cavage est réalisé sous la forme d'une cavité, notamment sous la forme d'un arrondi négatif d'une arête au niveau de laquelle se rencontrent une extrémité du flanc arrière et une extrémité d'une zone plane de la surface de la partie d'appui.

8. Courroie selon l'une des revendications 1 - 6, dans laquelle le sous-cavage est réalisé de manière rectiligne, ou
dans laquelle le sous-cavage est réalisé en tant qu'arrondi négatif.

9. Courroie selon l'une des revendications 1 - 8, dans laquelle les éléments sont agencés dans au moins une rangée s'étendant longitudinalement relativement à une direction de mouvement.

10. Courroie selon la revendication 9, dans laquelle le flanc avant d'un élément suivant débute en-dessous du flanc arrière d'un élément précédent.

11. Courroie selon la revendication 9 ou la revendication 10, dans laquelle les éléments sont agencés dans des rangées mutuellement voisines transversalement à la direction de mouvement, de préférence en étant décalés mutuellement dans la direction de mouvement.

12. Courroie selon l'une des revendications 9 - 11, dans laquelle les rangées sont espacées les unes des autres respectivement par une rainure.

13. Courroie selon l'une des revendications 9 - 12, dans laquelle les éléments d'une rangée sont agencés selon un sens opposé à celui des éléments d'une autre rangée.
